# EUROPÄISCHE PATENTSCHRIFT

(11) **EP 1 196 028 B1**
(45) Veröffentlichungstag und Bekanntmachung des Hinweises auf die Patenterteilung: **25.06.2003**
(21) Anmeldenummer: 00943516.5
(22) Anmeldetag: 26.07.2000
(51) Int. Cl.: A01M 23/22, A01M 23/10

(54) **FANGVORRICHTUNG FÜR KLEINTIERE**
TRAP FOR SMALL ANIMALS
PIEGE POUR PETITS ANIMAUX

(30) Priorität: 27.07.1999 CH 137799; 14.09.1999 CH 168299
(43) Veröffentlichungstag der Anmeldung: 17.04.2002
(73) Patentinhaber: Malevez, Jean-Marc, 4451 Wintersingen (CH)
(72) Erfinder: Malevez, Jean-Marc, 4451 Wintersingen (CH)
(74) Vertreter: Troesch Scheidegger Werner AG
(86) Internationale Anmeldenummer: CH0000407
(87) Internationale Veröffentlichungsnummer: WO01006850

(56) Entgegenhaltungen:
- GB-A- 207 057
- US-A- 1 650 458
- US-A- 2 454 476
- US-A- 5 235 779

## Beschreibung

Die vorliegende Erfindung betrifft eine Fangvorrichtung zum Fangen von Kleintieren nach dem Oberbegriff von Anspruch 1.

Es sind eine Menge Vorrichtungen und Methoden bekannt,. um Kleintiere wie z.B. Mäuse, Ratten, Marder etc. zu fangen und ggf. zu töten. Gerade auf offenen Feldern mit Bepflanzungen, wie beispielsweise Obstplantagen, können z.B. Mäuse sehr grossen Schaden anrichten und müssen deshalb entfernt werden. Dafür können sie entweder eingefangen und weggeführt werden oder sie werden durch vergasen, vergiften oder mittels Fallen getötet.

Ein relativ effizientes, übliches, aber unter ökologischen und ethischen Gesichtspunkten nicht unbedenkliches Verfahren besteht darin, die Tiere durch Zufuhr von Gas oder Gift in ihre unterirdischen Gänge zu töten. Es besteht durch den Einsatz von Gas oder Gift immer auch für die das Verfahren anwendende Personen ein gewisses gesundheitliches Risiko und es werden neben den Zieltieren auch weitere im Boden befindliche Tiere in Mitleidenschaft gezogen.

Bei den mechanischen Vorrichtungen wird herkömmlicherweise ein Köder in der Vorrichtung derart plaziert, dass das Tier über einen definierten Weg zum Köder geführt wird und dabei einen federbehafteten Auslösemechanismus betätigt, welcher entweder den Eingang zur geschlossenen Vorrichtung schliesst oder einen mit einer starken Feder angetriebenen Schwenk- oder Schlagmechanismus betätigt, welcher das Tier erschlagen sollte. Derartige Vorrichtungen haben meistens einen verhältnismässig grossen Platzbedarf und können damit praktisch nur oberirdisch auf genügend grossen Flächen oder Räumen eingesetzt werden, oder es braucht für ihre Plazierung eine zeitaufwendige Vorbereitung.

So ist aus der US 5,235,779 eine Tierfalle für den Einsatz auf Oberflächen bekannt, bei welchem die Tiere über seitliche Öffnungen eines zylindrischen, nach oben offenen Gehäuses in das Gehäuseinnere eindringen können. Angelockt werden die Tiere dabei durch eine Lockmittel, welches in der Mitte des Gehäuseinneren an einem Träger angeordnet ist. Das Lockmittel hält dabei einen ebenfalls zylindrischen, nach unten offenen Verschlusskörper in einer erhöhten Stellung, so dass die Öffnungen für die Tiere zugänglich sind. Wenn nun ein Tier in das Gehäuseinnere eindringt und sich am Lockmittel zu schaffen macht, fällt der Verschlusskörper nach unten und verschliesst damit die Öffnungen. Damit kann das Tier, welches sich im Inneren der Tierfalle befindet gefangen werden. Nachteilig an dieser Konstruktion ist, dass sie sich nur für kleine Tiere eignet, welche vollständig in das Innere des Gehäuses eindringen können, da sonst die Eingänge nicht vollständig geschlossen werden und ein grösseres Tier sich rückwärts aus der Falle befreien kann. Weiter eignet sich diese Tierfalle lediglich zum fangen von Tieren, aber nicht zum gleichzeitigen Töten der Tiere.

Weitere, ähnliche Konstruktionen sind aus der US 1,650,458, der US 2,454,476 sowie der GB 207 057 bekannt. Allen diesen Lösungen ist gemeinsam, dass die Falle als reine Fangvorrichtung ausgelegt ist, welche insbesondere den Dimensionen der zu fangenden Tiere derart angepasst sein müssen, dass die Tiere jeweils immer vollständig in die jeweiligen Gehäusebereiche eindringen müssen, damit die Öffnungen zuverlässig durch die Verschlussmechanismen geschlossen und damit die Tiere gefangen werden.

Die Aufgabe der vorliegenden Erfindung lag darin, eine Fangvorrichtung zu finden, welche zuverlässig und sicher die Tiere auch auf dem freien Feld, im Boden oder im Wasser zu fangen vermag. Überdies soll sie schnell positioniert werden können, einfach zu kontrollieren sein und möglichst wartungsfrei sein.

Diese Aufgabe wird erfindungsgemäss durch eine Fangvorrichtung mit den kennzeichnenden Merkmalen nach Anspruch 1 gelöst.

Bevorzugte Ausführungsformen ergeben sich aus den abhängigen Ansprüchen 2 bis 9.

Die erfindungsgemässe Ausgestaltung der Fangvorrichtung erlaubt es, diese neben der Verwendung auf dem Boden auch unterirdisch im Bereich von Tiergängen einzusetzen. Das Gehäuse kann einfach im Bereich der Austrittlöcher oder der Gänge in den Boden eingesetzt werden, entweder durch vorheriges Ausbohren resp. Ausheben von Material im Umfang der Grösse der Fangvorrichtung oder in weichem Boden oder bei grossen Gangdurchmessern durch direktes Einstecken in den Boden selbst.

Wenn vorzugsweise zwei Öffnungen ausgebildet sind, kann die Falle nicht nur einseitig sondern auch zweiseitig wirken. Damit kann sie beispielsweise im Bereich von Gangverzweigungen oder Mitten im Verlauf eines Ganges eingesetzt werden und unabhängig von der Durchgangsrichtung der Tiere wirken. Zudem muss damit nicht genau der Richtungsverlauf der Gänge eruiert und danach die Falle exakt ausgerichtet werden, da selbst bei einem unausgerichteten Aufstellen der Falle die Gefahr sehr klein ist, dass beide Öffnungen durch Erdmaterial abgedeckt sind und damit nur den Gang verschliessen. Vorzugsweise sind die Öffnungen derart gross bemessen, dass zwischen den beiden Öffnungen nur ein geringer Steg ausgebildet ist.

Ein weiterer Vorteil besteht in der Ausbildung des unteren Bereiches des Sperrorganes als Hohlzylinder. Damit wirkt der untere Rand des Sperrorgans beim Auslösen durch ein Tier als Kante, welche aufgrund der vorteilhafterweise auf die Grösse des Tieres angepassten Abmessungen, insbesondere des Durchmessers des Gehäuses, im Nackenbereich des Tieres auftrifft. Damit wird in den häufigsten Fällen das Tier sofort getötet und nicht nur verletzt. Vorzugsweise ist ein Anschlag vorhanden, welcher verhindert, dass die Unterkante des Sperrorganes bis auf den Boden des Gehäuses aufschlagen kann und damit die Öffnung vollständig verschliesst. Damit kann eine Verletzung von kleineren Tieren vermieden werden, welche das Sperrorgan auslösen oder aber auch die Verletzung von Zieltieren, welche sich nur mit ihren Extremitäten im Bereich des Sperrorganes im Moment des Schliessens aufhalten.

Das Sperrorgan kann erfindungsgemäss auch drehbar im Gehäuse angeordnet sein und damit die Öffnung von der Seite her durch eine Dreh-Schiebebewegung verschliessen.

Ein weiterer grosser Vorteil der vorliegenden Erfindung liegt weiter darin, dass die Fangvorrichtung einen sehr robusten und einfach wartbaren Aufbau aufweist und damit gerade beim Einsatz auf dem freien Feld mit hoher Wirtschaftlichkeit betrieben werden kann.

Wenn das Gehäuse vorzugsweise bis auf die Öffnungen geschlossen ausgebildet ist, kann insbesondere bei unterirdisch eingesetzten Fangvorrichtungen kein Licht oder Luftzug von oben nach unten in die Gänge der zu fangenden Tiere eindringen. Es hat sich gezeigt, dass damit die Fangergebnisse weiter verbessert werden konnten, da gerade bei Lichteinfall die Fangvorrichtungen von den Tieren gemieden werden. Dies erlaubt auch das Einbringen von Ködern in die Falle, was unter anderem dazu beiträgt, dass nur Zieltiere gefangen werden und nicht andere Tiere.

Bevorzugterweise werden die erfindungsgemässen Fangvorrichtungen im Erdbereich unterirdisch eingesetzt oder oberirdisch resp. im Wasser durch einfaches Aufstellen auf dem Boden oder Aufhängen und dient dem Einfangen von Kleintieren.

Ein Ausführungsbeispiel der vorliegenden Erfindung wird nachstehend anhand von Figuren noch näher erläutert. Es zeigen
Fig. 1 die Ansicht einer erfindungsgemässen Fangvorrichtung in Wartezustand;
Fig. 2 die Ansicht der Fangvorrichtung nach Figur 1 in ausgelöstem Zustand; und
Fig. 3 und 4 die Seitenansicht mit Querschnitt einer alternativen Ausführungsform einer erfindungsgemässen Fangvorrichtung mit drehbarem Schliesselement.

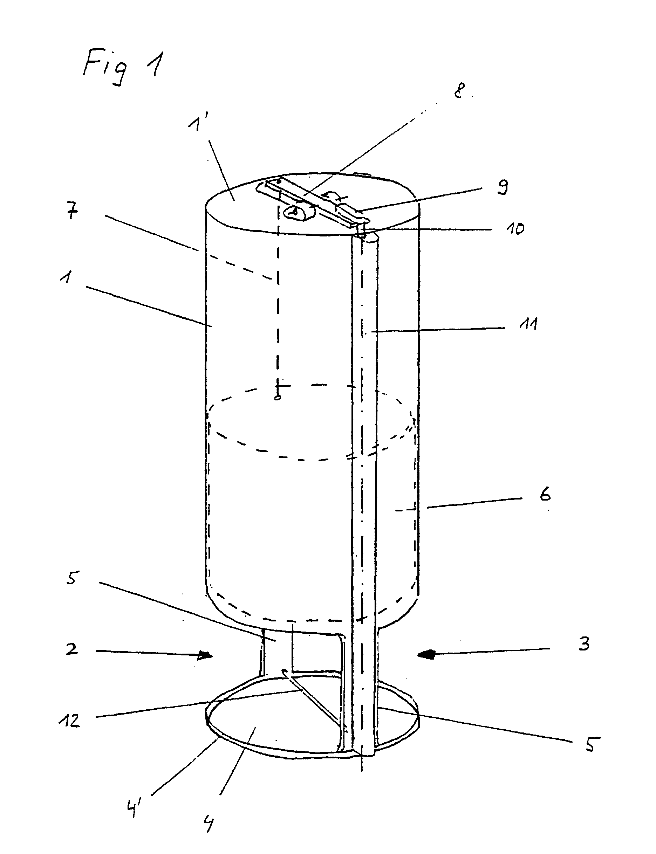

In Figur 1 ist schematisch die Ansicht einer erfindungsgemässen Fangvorrichtung dargestellt. Das vorzugsweise kreisförmige, hohlzylindrische Gehäuse 1 weist an seinem unteren Ende zwei seitliche Öffnungen 2, 3 auf, welche gegen unten durch den Boden 4 und seitlich durch die beiden Stege 5 begrenzt sind. Die Breite der Stege 5 und auch die Anzahl der Öffnungen 2,3 können praktisch beliebig gewählt werden, es hat sich in der Praxis gezeigt, dass die Anordnung von zwei Öffnungen 2,3 bei verhältnismässig schmalen Stegen 5 als vorteilhaft bewährt.

Im Bereich der Öffnungen 2,3 weist der Boden 4 vorzugsweise einen Steg 4' auf, welcher als Griffkante für die zu fangenden Tiere dient.

Im Innern des Gehäuses 1 ist das Schliesselement 6 in Form eines nach unten ebenfalls vorzugsweise hohlzylindrisch ausgebildeten , entlang der Innenwand des Gehäuses 1 verschiebbaren Kolbens ausgebildet. Das Schliesselement 6 ist vorzugsweise gegen oben zur Gehäusedecke mit einer Feder, vorzugsweise einer Spiral-Druckfeder (hier nicht dargestellt), abgestützt und wird über einen Schliessmechanismus, welcher aus einem Verbindungselement 7 und einer in der Gehäusedecke 1' schwenkbar gelagerten Wippe 8 aufgebaut ist, in der dargestellten Warteposition gehalten.

Die Wippe 8 wird wiederum durch den Nocken 9 eines Drehstabes 10 in der gezeigten Lage blockiert. Der Drehstab 10 ist koaxial zur Gehäuselängsachse drehbar an der Aussenseite des Gehäuses 1 gelagert und vorzugsweise von einer Verschalung 11 umgeben. Der Drehstab 10 kann vorteilhafterweise natürlich auch im Innern des Gehäuses 1 angeordnet sein. Am unteren Ende des Drehstabes 10 ist nun ein senkrecht zur Gehäuselängsachse resp. parallel zum Boden 4 verlaufender Auslösebügel 12 angeordnet und bildet damit den Auslösemechanismus der Fangvorrichtung.

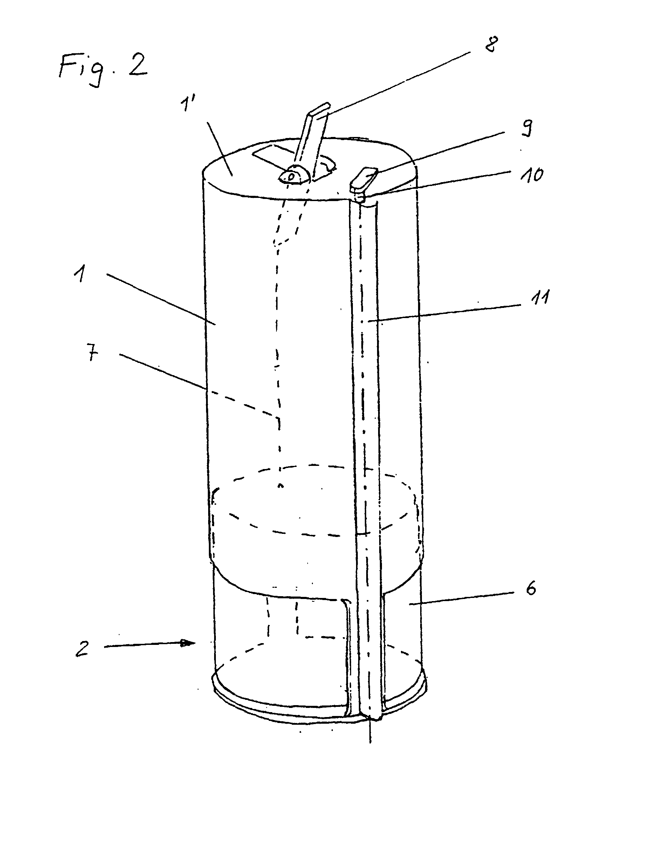

Wenn nun der Auslösebügel 12 seitlich angestossen wird, so wird damit der Drehstab 10 um seine Achse verschwenkt und damit auch der Nocken 9 von seiner Auflage auf der Wippe 8 wegbewegt. Durch die auf das Schliesselement 6 wirkende Federkraft kann dieses nun nach unten schnellen, wobei die Wippe 8 verschwenkt wird, wie dies aus der Darstellung in Figur 2 ersichtlich ist.

Das Schliesselement 6 stösst vorzugsweise an ein Anschlagelement, bevor es auf dem Boden 4 aufschlägt resp. mit diese in Berührung kommt. Das oder die Anschlagelemente können entweder direkt am Boden 4 oder an der Innenseite des Gehäuses 1 ausgebildet sein. Der Vorteil dabei liegt insbesondere darin, dass damit wesentlich kleinere Tiere als die Zieltiere nicht durch das Schliesselement 6 erschlagen werden, oder Zieltiere nicht verletzt werden, welche im Moment der Auslösung nur ihre Extremitäten im Bereich der Unterkante des Schliesselementes 6 positioniert haben.

Der Auslösebügel 12 wird beispielsweise dann ausgelöst, wenn sich ein Tier durch die Öffnung 2 resp. 3 ins Innere des Gehäuses 1 begibt. Durch entsprechende Wahl der Abmessung insbesondere des Durchmessers des Gehäuses 1 kommt nun der untere Rand des Schliesselementes 6 im Bereich des Nackens dieses Tieres zu liegen und versetzt ihr dort einen kräftigen Schlag. Der grosse Vorteil liegt nun unter anderem darin, dass diese Fangvorrichtung nicht nur von einer Seite her wirkt, sondern beidseitig, was ihren Einsatz in unterirdisch verlaufenden Gängen oder Höhlen erlaubt. Die ausgelenkte Wippe 8 dient als Anzeige dafür, ob die Fangvorrichtung ausgelöst worden ist oder nicht. Die Anzeigewirkung kann beispielsweise durch eine spezielle farbliche Kennung noch unterstützt werden, was gerade den Einsatz von mehreren solcher Fangvorrichtungen auf einem grösseren Gelände sehr erleichtert. Um die Tiere dazu zu bringen, die Falle zu betreten, kann ein Lockstoff oder Köder entweder im Bodenbereich 4 oder im Innern des Gehäuses 1 resp. im Inneren des Schliesselementes 6 ausgelegt resp. angebracht werden.

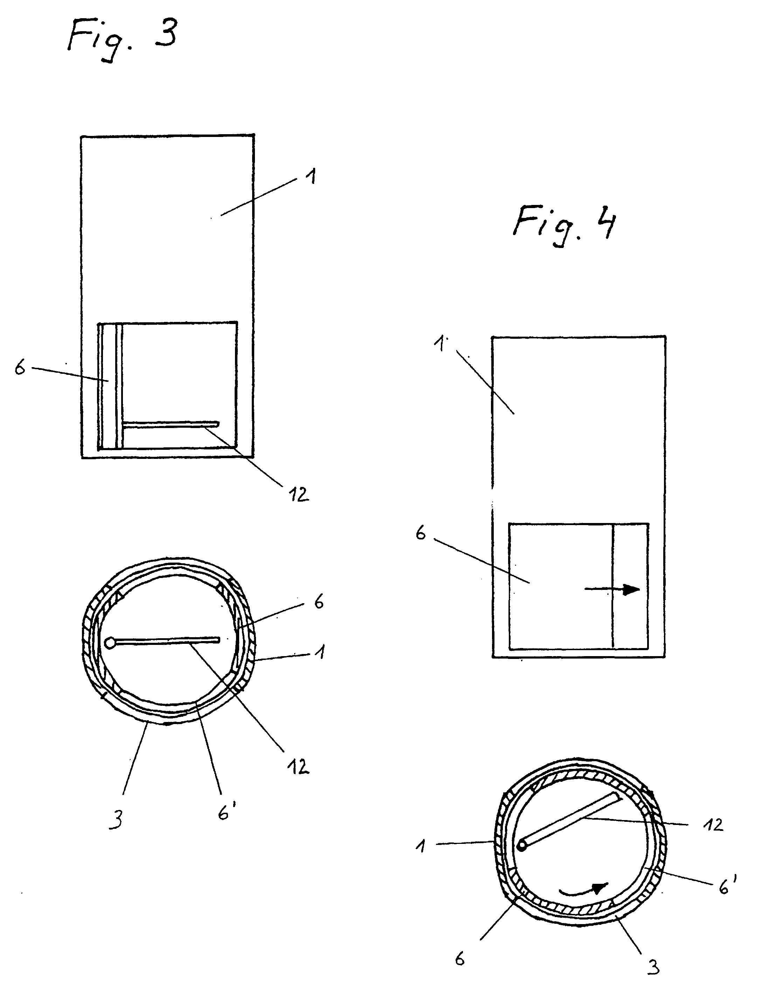

In Figur 3 ist nun die Seitenansicht mit Querschnitt einer alternativen Ausführungsform einer erfindungsgemässen Fangvorrichtung mit einem im Gehäuse 1 drehbar angeordneten Schliesselement 6 dargestellt. Das Schliesselement 6 ist vorzugsweise als Hohlzylinder analog dem Gehäuse 1 mit Öffnungen 6' ausgebildet. In der in Figur 3 dargestellten Betriebsstellung ist das Schliesselement 6 derart verdreht im Gehäuse 1 angeordnet, dass sich die Öffnungen 3 des Gehäuses 1 und die Öffnungen 6' des Schliesselementes 3 überdecken und damit beispielsweise einen offenen Durchgang für das zu fangende Tier bilden.

Beim Betätigen des Auslösebügels 12 durch ein Tier wird nun, wie in Figur 4 dargestellt, das Schliesselement 6, beispielsweise mittels einer Drehfeder, in Pfeilrichtung betätigt resp. verdreht und verschliesst damit die Öffnung 3 des Gehäuses 1.

Die dargestellte Fangvorrichtung weist einen sehr einfachen und insbesondere stabilen Aufbau auf mit einfacher und wartungsarmer Mechanik. Sie eignet sich zwar insbesondere für den Einsatz im Boden, d.h. für unterirdisch angelegte Gänge, kann aber ebensogut auch auf der Oberfläche aufgestellt werden und im Sinne herkömmlicher Fangvorrichtungen eingesetzt werden.

## Patentansprüche

1. Fangvorrichtung zum Fangen von Kleintieren mit einem Gehäuse (1), einem schliessbaren Eingangsbereich (2,3), einem Auslösemechanismus (10,11,12), welcher mit einem Schliessmechanismus (7,8) gekoppelt ist, der ein im Gehäuse (1) angeordnetes klapp- oder verschiebbares Sperrelement (6) betätigt, wobei das Gehäuse (1) als Hohlkörper ausgebildet ist, welches an seinem einen Ende mindestens eine seitliche Öffnung (2;3) aufweist und das Sperrelement (6) mindestens teilweise über oder seitlich an die Öffnung (2;3) verschieb- oder drehbar im Gehäuse (1) angeordnet ist und der Hohlkörper (1) am seinem die Öffnungen (2;3) aufweisenden Ende einen geschlossenen Boden (4) aufweist, **dadurch gekennzeichnet, dass** der Auslösemechanismus eine Betätigungsstange (12) aufweist, welche in der Ruhestellung radial zur Längsachse des Gehäuses (1) im Bereich der Öffnung (2;3) resp. der Öffnungen angeordnet ist, und koaxial zur Gehäuselängsachse schwenkbar gelagert ist und das mit dem Auslösemechanismus verbundene Sperrelement (6) als koaxial zum Gehäuse (1) angeordneter Körper ausgebildet ist, welcher mindestens in seinem unteren, dem Gehäuseboden (4) zugewandten Bereich, als Hohlkörper ausgebildet ist und mit einer Feder in Gehäuselängsrichtung gegen das Gehäuse (1) abgestützt ist.

2. Fangvorrichtung nach Anspruch 1, **dadurch gekennzeichnet, dass** zwei Öffnungen (2,3) am selben Ende des Gehäuses (1) ausgebildet sind, welche vorzugsweise einander gegenüberliegend angeordnet sind.

3. Fangvorrichtung nach Anspruch 1 oder 2, **dadurch gekennzeichnet, dass** zwischen dem Boden (4) und den Öffnungen (2;3) ein Steg ausgebildet ist.

4. Fangvorrichtung nach einem der Ansprüche 1 bis 3, **dadurch gekennzeichnet, dass** die Betätigungsstange (12) entlang der Längsachse des Gehäuses (1) verschiebbar angeordnet ist.

5. Fangvorrichtung nach Anspruch 4, **dadurch gekennzeichnet, dass** die Lagerung der Betätigungsstange (12) im Bereich der Gehäusewandung (1) auf der Innen- oder Aussenseite ausgebildet ist und das freie Ende der Betätigungsstange (12) bis nahe an die gegenüberliegende Innenwand des Gehäuses ragt.

6. Fangvorrichtung nach einem der Ansprüche 4 bis 5, **dadurch gekennzeichnet, dass** die Betätigungsstange (12) mit einem koaxial zur Gehäuselängsachse angeordneten Drehstab (10) verbunden ist, dessen eines Ende (9) mit einem Auslösebügel (8) in Anschlag gebracht werden kann, welcher mit dem Sperrelement (6) verbunden ist.

7. Fangvorrichtung nach einem der Ansprüche 1 bis 6, **dadurch gekennzeichnet, dass** die Feder des Sperrelementes (6) als Druckfeder oder Drehfeder ausgebildet ist.

8. Fangvorrichtung nach einem der Ansprüche 1 bis 7, **dadurch gekennzeichnet, dass** das Gehäuse (1) als Hohlzylinder mit kreisförmigem Querschnitt ausgebildet ist und vorzugsweise aus Metall, wie rostfreiem Stahl, besteht und bis auf die Öffnungen (2;3) rundum geschlossen ausgebildet ist.

9. Verwendung einer Fangvorrichtung nach einem der Ansprüche 1 bis 8 im Erdbereich von unterirdischen Tiergängen, durch Aufstellen auf dem Boden oder im Wasser zum Fangen von Kleintieren.

## Claims

1. Trap for the capture of small animals comprising a housing (1), a closable entry section (2,3), a release mechanism (10,11,12) coupled to a closure mechanism (7,8), which actuates a stop element (6) disposed flappable or relocatable in the housing (1), whereby the housing (1) is built as a hollow body with at least one side opening (2;3) at one end and whereby the stop element (6) is arranged at least partly relocatable or pivotable over or laterally to the opening (2;3) and whereby the hollow body (1) has a closed bottom (4) at its end with the openings (2;3), **characterized in that** the release mechanism comprises an action rod (12) arranged radial with respect to the longitudinal axis of the housing (1) at the zone of the opening (2;3) or openings respectively in its normal position and pivotable arranged coaxial with respect to the longitudinal axis of the housing and that the stop element (6) connected with the release mechanism is built up as a body coaxially arranged with respect to the housing (1), which body is built as a hollow body at least at its lower section near side to the bottom (4) and is supported by a spring in longitudinal direction against the housing (1).

2. Trap according to claim 1, **characterized in that** the two openings (2,3) are arranged at the same end of the housing (1), preferably opposite to each other.

3. Trap according to claim 1 or 2, **characterized in that** a rack is arranged between the bottom (4) and the openings (2;3).

4. Trap according to one of claims 1 to 3, **characterized in that** the action rod (12) is arranged relocatable along the longitudinal axis of the housing (1).

5. Trap according to claim 4, **characterized in that** the support of the action rod (12) is disposed in the region of the wall of the housing (1) at its inside or outside and that the free end of the action rod (12) protrudes close to the opposite inner wall of the housing.

6. Trap according to one of claims 4 to 5, **characterized in that** the action rod (12) is connected to a torsion rod (10) coaxial arranged with respect to the longitudinal axis of the housing, whose one end (9) may be brought down to a release clamp (8) which is connected to the stop element (6).

7. Trap according to one of claims 1 to 6, **characterized in that** the spring of the stop element (6) is built as a push or torsion spring.

8. Trap according to one of claims 1 to 7, **characterized in that** the housing (1) is a hollow cylinder with a circular cross section and consists preferably of metal, such as stainless steel, and is built up all around closed except for the openings (2;3).

9. Use of a trap according to one of claims 1 to 8 within the zone of underground animal corridors by installing it on the ground or in the water to catch small animals.

## Revendications

1. Piège pour attraper des petits animaux, comprenant un boîtier (1), une zone d'entrée (2, 3) apte à être fermée, un mécanisme de déclenchement (10, 11, 12) accouplé à un mécanisme de fermeture (7, 8) qui actionne un élément d'obstruction (6) disposé dans le boîtier (1) et apte à être rabattu ou à coulisser, le boîtier (1) étant conçu comme un corps creux qui présente à une extrémité au moins une ouverture latérale (2 ; 3), l'élément d'obstruction (6) étant disposé dans le boîtier (1) pour pouvoir coulisser ou tourner au moins partiellement sur l'ouverture (2 ; 3) ou sur le côté de celle-ci, et le corps creux (1) présentant à son extrémité pourvue des ouvertures (2 ; 3) un fond fermé (4),
**caractérisé en ce que** le mécanisme de déclenchement comporte une tige d'actionnement (12) qui, en position de repos, est disposée radialement par rapport à l'axe longitudinal du boîtier (1), dans la zone de l'ouverture (2 ; 3) ou des ouvertures, et qui est montée pour pouvoir pivoter coaxialement par rapport à l'axe longitudinal du boîtier, et l'élément d'obstruction (6) relié au mécanisme de déclenchement est conçu comme un corps qui est disposé coaxialement par rapport au boîtier (1), qui a la forme, au moins dans sa zone inférieure tournée vers le fond de boîtier (4), d'un corps creux et qui s'appuie contre le boîtier (1) dans le sens longitudinal de celui-ci grâce à un ressort.

2. Piège selon la revendication 1, **caractérisé en ce qu'**il est prévu sur la même extrémité du boîtier (1) deux ouvertures (2, 3) qui sont disposées de préférence à l'opposé l'une de l'autre.

3. Piège selon la revendication 1 ou 2, **caractérisé en ce qu'**une bande est formée entre le fond (4) et les ouvertures (2 ; 3).

4. Piège selon l'une des revendications 1 à 3, **caractérisé en ce que** la tige d'actionnement (12) est apte à coulisser le long de l'axe longitudinal du boîtier (1).

5. Piège selon la revendication 4, **caractérisé en ce que** le montage de la tige d'actionnement (12) dans la zone de la paroi de boîtier (1) est formé sur le côté intérieur ou extérieur et l'extrémité libre de la tige d'actionnement (12) s'avance jusqu'à proximité de la paroi intérieure opposée du boîtier.

6. Piège selon l'une des revendications 4 à 5, **caractérisé en ce que** la tige d'actionnement (12) est reliée à une barre de torsion (10) qui est disposée coaxialement par rapport à l'axe longitudinal du boîtier et dont une extrémité (9) peut être amenée en butée avec une pièce recourbée de déclenchement (8) reliée à l'élément d'obstruction (6).

7. Piège selon l'une des revendications 1 à 6, **caractérisé en ce que** le ressort de l'élément d'obstruction (6) est conçu comme un ressort de compression ou de torsion.

8. Piège selon l'une des revendications 1 à 7, **caractérisé en ce que** le boîtier (1) est conçu comme un cylindre creux à section circulaire, se compose de préférence de métal, par exemple d'inox, et est fermé sur tout le tour à l'exception des ouvertures (2 ; 3).

9. Utilisation d'un piège selon l'une des revendications 1 à 8 dans la zone de passages souterrains d'animaux, sur le sol ou dans l'eau, pour attraper des petits animaux.
